Europäisches Patentamt

European Patent Office

Office européen des brevets

(19)

(11)  **EP 1 210 805 B1**

(12)  **EUROPÄISCHE PATENTSCHRIFT**

(45) Veröffentlichungstag und Bekanntmachung des
Hinweises auf die Patenterteilung:
**26.05.2004  Patentblatt 2004/22**

(21) Anmeldenummer: **00988557.5**

(22) Anmeldetag: **02.11.2000**

(51) Int Cl.⁷: **H04L 27/00**

(86) Internationale Anmeldenummer:
**PCT/DE2000/003859**

(87) Internationale Veröffentlichungsnummer:
**WO 2001/033793 (10.05.2001 Gazette 2001/19)**

(54)  **VORRICHTUNG ZUR FEINSYNCHRONISATION VON CODESIGNALEN**

DEVICE FOR THE IDEAL SYNCHRONIZATION OF CODE SIGNALS

DISPOSITIF DE SYNCHRONISATION PRECISE DE SIGNAUX DE CODAGE

(84) Benannte Vertragsstaaten:
**AT BE CH CY DE DK ES FI FR GB GR IE IT LI LU
MC NL PT SE TR**

(30) Priorität: **05.11.1999  DE 19953350**

(43) Veröffentlichungstag der Anmeldung:
**05.06.2002  Patentblatt 2002/23**

(73) Patentinhaber: **Infineon Technologies AG
81669 München (DE)**

(72) Erfinder:
• **DOETSCH, Markus
56072 Koblenz-Rübenach (DE)**
• **PLECHINGER, Jörg
80469 München (DE)**
• **JUNG, Peter
67697 Otterberg (DE)**

• **SCHMIDT, Peter
67158 Ellerstadt (DE)**
• **SCHNEIDER, Michael
56823 Büchel (DE)**
• **KELLA, Tideya
80337 München (DE)**
• **FEYFANT, Patrick
88 Guang Yuan Xi Rd.,Shanghai 200030 (CN)**

(74) Vertreter: **Graf Lambsdorff, Matthias, Dr. et al
Patentanwälte
Lambsdorff & Lange
Dingolfinger Strasse 6
81673 München (DE)**

(56) Entgegenhaltungen:
**WO-A-99/34528          US-A- 5 640 416**

**Beschreibung**

Die Erfindung betrifft eine Vorrichtung zur Feinsynchronisation von Codesignalen mit einem codierten Empfangssignal, wobei lokal erzeugte Codesignale in vollständige Phasenübereinstimmung mit dem codierten Empfangssignal gebracht werden.

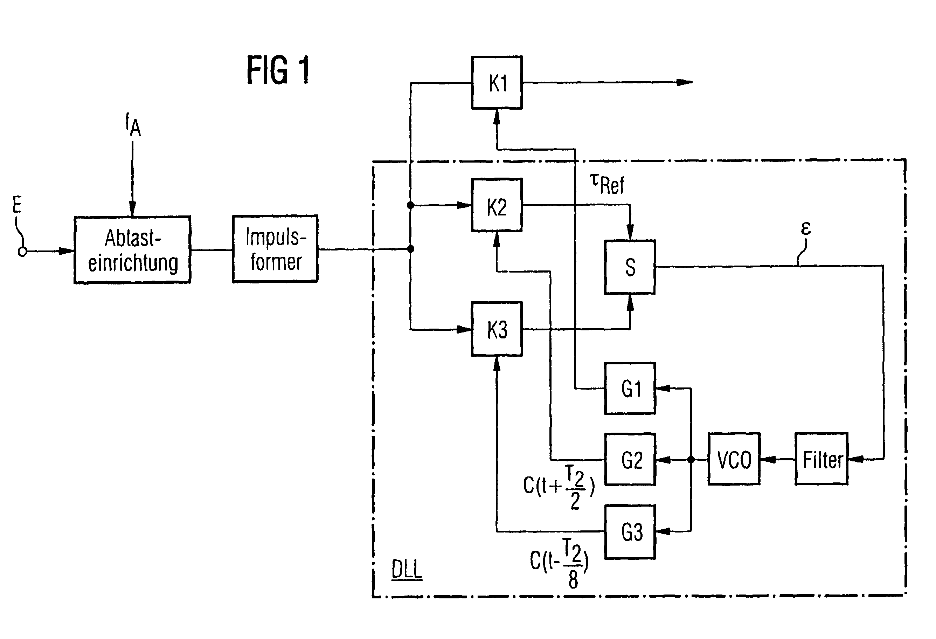

Fig. 1 zeigt eine Vorrichtung zur Feinsynchronisation von Codesignalen mit einem codierten Empfangssignal nach dem Stand der Technik.

Ein codiertes Empfangssignal gelangt über einen Signaleingang E zu einer Abtasteinrichtung zur Abtastung mit einer bestimmten Abtastfrequenz $f_A$. Das abgetastete Signal wird einem Impulsformer zugeführt, der eine Autokorrelationsfunktion aufweist. Zwei aufeinanderfolgende, durch den Impulsformer impulsgeformte Abtastwerte werden drei Korrelatoren K1, K2, K3 zugeführt. Die Korrelatoren K1, K2, K3 sind Multiplikatoren. Die Korrelationseinrichtung K1, K2, K3 sind jeweils mit Codegeneratoren G1, G2, G3 verbunden. Die Ausgangskorrelationswerte der Korrelatoren K2, K3 werden durch einen Subtrahierer S zur Bildung eines Differenz- bzw. Abweichungssignals $\varepsilon$ subtrahiert. Das Abweichungssignal $\varepsilon$ gelangt über einen Schleifenfilter zu einem spannungsgesteuerten Oszillator VCO, der die Generatoren G1, G2, G3 ansteuert. Der Korrelator K2, K3 sowie der Subtrahierer bilden einen Phasenabweichungsdetektor zur Erzeugung eines Phasenabweichungssignals $\varepsilon$. Der Phasendetektor, das Schleifenfilter und der spannungsgesteuerte Oszillator VCO bilden mit den Generatoren G2, G3 für die Korrelatoren K2, K3 eine DLL-Schaltung (DLL: Delay Locked Loop). Der Generator G1 bildet den Differenzcode für den Korrelator K1, der das empfangene codierte Eingangssignal mit dem Referenzcode korreliert. Das Ausgangssignal des Korrelators K1 wird zur weiteren Datenverarbeitung, wie Descrambling and Dechannelization bzw. Entspreizung abgegeben.

Der Codegenerator G2 bildet einen um eine bestimmten Zeitphase vorauseilenden Code $C(t+T_c/2)$, und der Codegenerator G3 bildet einen um die gleiche Zeitphase nacheilenden Code $C(t-T_c/2)$. Der spannungsgesteuerte Oszillator VCO treibt die Generatoren G2, G3 derart an, daß das Abweichungssignal $\varepsilon$ minimiert wird. Durch diese Nachführung wird die Phase des lokal erzeugten Codes mit der Phase des codierten Empfangssignals in vollständige Übereinstimmung gebracht bzw. synchronisiert.

Der Nachteil bei der in Fig. 1 gezeigten Vorrichtung zur Feinsynchronisation besteht darin, daß insgesamt drei Codegeneratoren G1, G2, G3 zur Erzeugung phasenverschobener Codesignale erforderlich sind. Der schaltungstechnische Aufwand der Vorrichtung zur Feinsynchronisation nach dem Stand der Technik ist somit sehr hoch.

In der Patentschrift US 5,640,416 A ist eine Vorrichtung zur Feinsynchronisation eines Codesignals mit einem codierten Empfangssignal beschrieben. Bei dieser Vorrichtung wird ein Empfangssignal nacheinander einer Abtasteinrichtung, einer Impulsformeinrichtung, einer Korrelationseinrichtung und einer Interpolationseinrichtung zugeführt. In der Korrelationseinrichtung wird das abgetastete und impulsgeformte Eingangssignal mit phasenverschobenen Codesignalen korreliert.

Es ist daher die Aufgabe der vorliegenden Erfindung, eine Vorrichtung zur Feinsynchronisation eines Codesignals mit einem codierten Empfangssignal zu schaffen, welche einen verringerten Schaltungsaufwand zu ihrer Realisierung benötigt.

Diese Aufgabe wird erfindungsgemäß durch eine Vorrichtung mit den im Patentanspruch 1 angegebenen Merkmalen gelöst.

Die Erfindung schafft eine Vorrichtung zur Feinsynchronisation eines Codesignals mit einem codierten Empfangssignal mit einer Abtasteinrichtung zum Abtasten des Empfangssignals in gleichmäßigen Abtastzeitabständen, einer Impulsformeinrichtung zur Impulsformung der abgetasteten Empfangssignalimpulse zur Abgabe eines ersten und eines zweiten impulsgeformten Abtastwertes in Abhängigkeit von einer Autokorrelationsfunktion, einem Zwischenspeicher zum Zwischenspeichern der beiden Abtastwerte, einer Codesignal-Erzeugungseinrichtung zur Generierung des Codesignals, einer Korrelationseinrichtung zur Korrelation des erzeugten Codes mit den beiden zwischengespeicherten Abtastwerten zu zwei Korrelationswerten, und mit einer Interpolationseinrichtung zur Bildung eines Interpolationswertes in Abhängigkeit von den beiden impulsgeformten Abtastwerten und der Abweichung zwischen den beiden Korrelationswerten. Bei beiden Korrelationen weist das dazu verwendete Codesignal dieselbe Zeitlage auf.

Weitere vorteilhafte Ausgestaltungen der erfindungsgemäßen Vorrichtung sind in den Unteransprüchen angegeben.

Die Korrelationseinrichtungen sind vorzugsweise Multiplizierer.

Bei einer bevorzugten Ausführungsform generiert die Codesignal-Erzeugungseinrichtung einen Scrambling-Code.

Bei einer weiteren bevorzugten Ausführungsform generiert die Codesignal-Erzeugungseinrichtung einen Entspreizungscode.

Die Korrelationseinrichtungen sind vorzugsweise jeweils Integratoren nachgeschaltet.

Bei einer besonderen Weiterbildung der erfindungsgemäßen Vorrichtung ist ein Subtrahierer zur Subtraktion der Korrelationswerte zur Bildung eines Abweichungssignals vorgesehen.

Dem Subtrahierer ist vorzugsweise ein digitales FIR-Schleifenfilter nachgeschaltet.

Bei einer besonders bevorzugten Ausführungsform der erfindungsgemäßen Vorrichtung ist der Abtastzeitabstand genau die halbe Chipzeitdauer $T_c$.

Die Interpolationsvorrichtung ist gemäß einer Ausführungsform der erfindungsgemäßen Vorrichtung ein linearer TVI-Interpolator.

Bei einer weiteren Ausführungsform der erfindungsgemäßen Vorrichtung ist die Interpolationseinrichtung ein quadratischer TVI-Interpolator.

Gemäß einer bevorzugten Weiterbildung weist die Interpolationseinrichtung eine Abweichungsfaktor-Berechnungseinheit zur Berechnung eines Abweichungsfaktors in Abhängigkeit von dem Abweichungssignal auf.

Bei einer weiteren bevorzugten Weiterbildung ist die Impulsformeinrichtung ein RRC-Filter.

Im weiteren werden bevorzugte Ausführungsformen der erfindungsgemäßen Vorrichtung unter Bezugnahme auf die beigefügten Zeichnungen beschrieben.

Es zeigen:

Fig. 1 eine Feinsynchronisationsvorrichtung nach dem Stand der Technik;

Fig. 2 eine Vorrichtung zur Feinsynchronisation eine Codesignals mit einem codierten Empfangssignal gemäß der Erfindung;

Fig. 3 eine besonders bevorzugte Ausführungsform der erfindungsgemäßen Vorrichtung zur Feinsynchronisation von Codesignalen mit einem codierten Empfangssignal;

Fig. 4a, b, c die Bildung der beiden impulsgeformten Abtastwerte in Abhängigkeit von der Autokorrelationsfunktion der Impulsformeinrichtung.

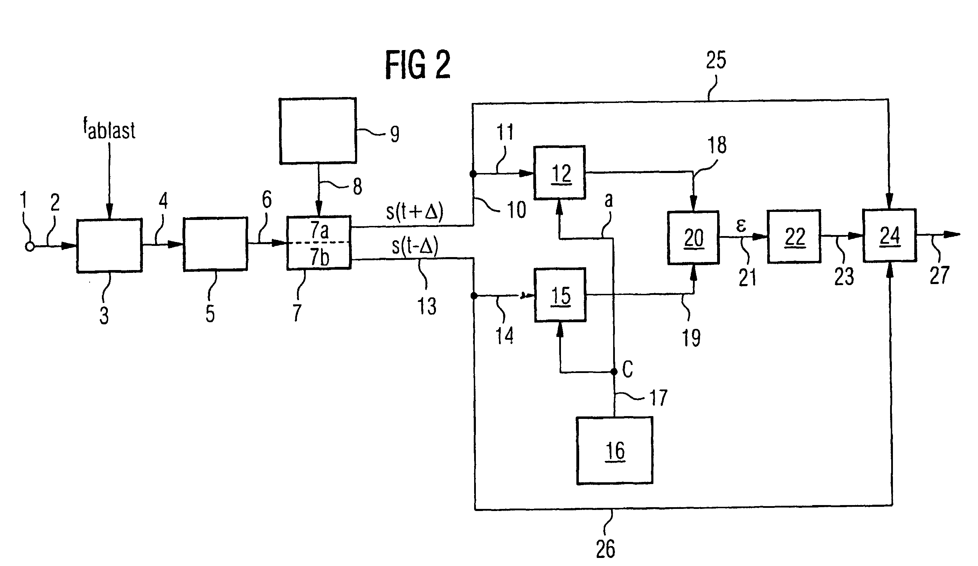

Wie man aus Fig. 2 erkennen kann, weist die erfindungsgemäße Vorrichtung zur Feinsynchronisation eines Codesignals mit einem codierten Empfangssignal einen Signaleingang 1 zur Aufnahme des codierten Empfangssignals auf. Das codierte Empfangssignal wird über eine Leitung 2 einer Abtasteinrichtung 3 zugeführt, die das codierte Empfangssignal mit einer bestimmten Abtastfrequenz $f_{abtast}$ abtastet. Die Abtastfrequenz hängt von der Chipzeitdauer $T_c$ ab:

$$f_{abtast} = 2/T_c$$

Das abgetastete codierte Empfangssignal wird über eine Leitung 4 einer Impulsformeinrichtung 5 zur Impulsformung der abgetasteten Empfangssignalpulse zugeführt. Die Impulsformeinrichtung ist notwendig, um die Intersymbolinterferenz des Empfangssignals zu minimieren. Die Impulsformeinrichtung 5 ist vorzugsweise ein RRC-Filter (RRC: Root Raised Cosine) mit einer bestimmten normalisierten Autokorrelationsfunktion ACF.

Die Autokorrelationsfunktion lautet:

$$\varphi_{gg}(t) = \frac{\cos\left(\pi r \dfrac{t}{T_c}\right)}{1 - \left(2r \dfrac{t}{T_c}\right)^2}\,\mathrm{sinc}\left(\frac{\pi t}{T_c}\right), \quad 0 \leq r \leq 1$$

wobei $T_c$ die Chipzeitdauer ist.

Ausgangsseitig ist die Impulsformeinrichtung 5 über eine Leitung 6 mit einem Zwischenspeicher 7 verbunden. Der Zwischenspeicher 7 weist einen ersten Speicherbereich 7a für einen ersten vorauseilenden impulsgeformten Abtastwert und einen zweiten Speicherbereich 7b für einen nachfolgenden impulsgeformten Abtastwert auf. Der Zwischenspeicher 7 wird über eine Steuerleitung 8 von einer Steuereinheit 9 gesteuert. Die Steuereinheit 9 steuert den Zwischenspeicher 7 so an, daß jeweils stets der erste Abtastwert in dem Speicherbereich 7a und der zweite Abtastwert in dem Speicherbereich 7b zwischengespeichert wird. Der zwischengespeicherte vorherige Abtastwert $s(t+\Delta)$ wird über eine Leitung 10 und eine Abzweigungsleitung 11 einer ersten Korrelationseinrichtung 12 zugeführt. Der nachfolgende, in dem Speicherbereich 7b des Zwischenspeicher 7 zwischengespeicherte Abtastwert S(t -Δ) gelangt über eine Leitung 13 und eine Abzweigungsleitung 14 zu einer zweiten Korrelationseinrichtung 15. Die Korrelationseinrichtungen 12, 15 sind vorzugsweise Multipliziereinrichtungen. Eine Codesignal-Erzeugungseinrichtung 16 generiert ein Codesignal, das über eine Leitung 17 an die erste Korrelationseinrichtung 12 an die zweite Korrelationseinrichtung 15 abgegeben wird.

Beide Korrelationseinrichtungen 12, 15 empfangen dasselbe Codesignal von einer einzigen Codesignal-Erzeugungseinrichtung 16. Der durch die erste Korrelationseinrichtung 12 erzeugte erste Korrelationswert wird über eine Leitung 18 und der durch die zweite Korrelationseinrichtung 15 erzeugte zweite Korrelationswert wird über eine Leitung 19 an einen Subtrahierer 20 angelegt. Der Subtrahierer 20 subtrahiert die beiden an den Leitungen 18, 19 anliegenden Korrelationswerte zur Bildung eines Differenz- bzw. Abweichungssignals ε, das über eine Ausgangsleitung 21 des Subtrahierers 20 an ein Schleifenfilter 22 abgegeben wird. Das Schleifenfilter 22 ist ein digitales FIR-Filter. Das gefilterte Abweichungssignal wird über eine Leitung 23 einer Interpolationseinrichtung 24 zugeführt. Die Interpolationseinrichtung 24 erhält über eine Leitung 25 den ersten Abtastwert s(t+Δ) und über eine Leitung 26 den nachfolgenden Abtastwert s(t-Δ) und gibt über eine Leitung 27 den erzeugten Interpolationswert zur weiteren Datenverarbeitung des Empfangssignals ab. Die Interpolationseinrichtung ist vorzugsweise ein linearer oder quadratischer TVI-Interpolator (TVI: Time Variant Interpolator).

Die Interpolationseinrichtung enthält bei einer bevorzugten Ausführungsform eine Abweichungsfaktor-Berechnungseinheit zur Berechnung eines Abweichungsfaktors N in Abhängigkeit von dem gefilterten Abweichungssignal ε.

Die Interpolationseinrichtung 24 erzeugt den Interpolationswert $\hat{s}$ aus den beiden impulsgeformten Abtastwerten s und dem Abweichungsfaktor N gemäß folgender Gleichung:

$$\hat{s} = Nx \frac{s(t+\Delta)\text{-}s(t\text{-}\Delta)}{4}+s(t\text{-}\Delta)$$

wobei Δ = $T_c$/4 und somit ein Viertel der Chipzeitdauer beträgt.

Der schaltungstechnische Aufwand der in Fig. 2 gezeigten erfindungsgemäßen Feinsynchronisationsvorrichtung ist relativ gering, da nur eine Codesignal-Erzeugungseinrichtung 16 zur Generierung des lokalen Codesignals vorgesehen ist.

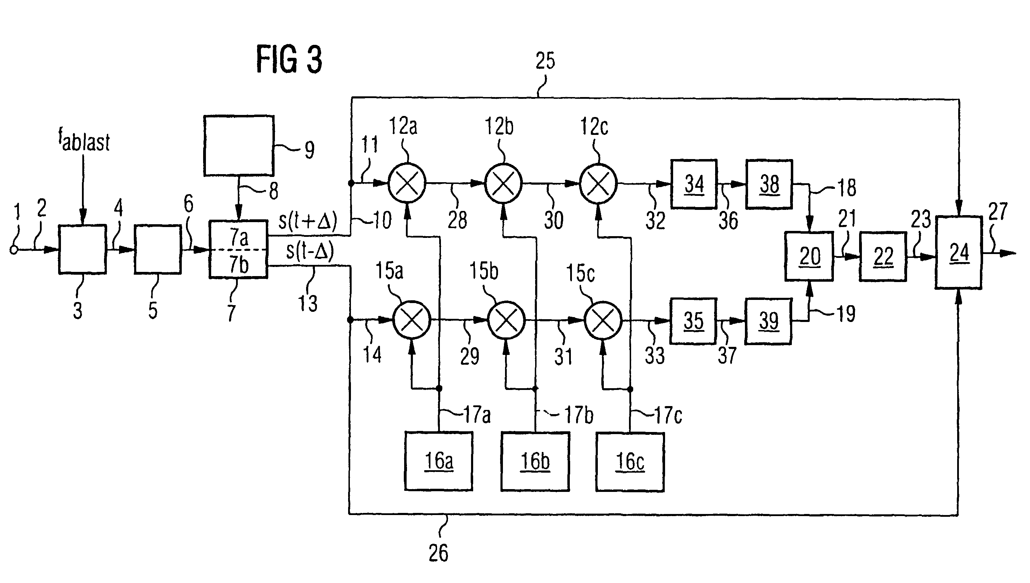

Fig. 3 zeigt eine besonders bevorzugte Ausführungsform der erfindungsgemäßen Feinsynchronisationsvorrichtung. Gleiche Bezugszeichen bezeichnen dabei die gleichen Bauelemente wie in Fig. 2. Bei der in Fig. 3 gezeigten Feinsynchronisationsvorrichtung werden mehrere unterschiedliche lokale Codesignale mit dem codierten Empfangssignal synchronisiert. Die Codesignal-Erzeugungseinrichtung 16a erzeugt einen Scrambling-Code, der über die Leitungen 17a an die Multiplizierer 12a, 15a zum Entschlüsseln der Abtastwerte abgegeben wird. Die entschlüsselten Abtastwerte werden über Leitungen 28, 29 den nachgeschalteten Multiplizierern 12b, 15b zugeführt. Die Codesignal-Erzeugungseinrichtung 16b erzeugt einen Spreizungs- bzw. Analysiercode. Der Entspreizungscode wird über die Leitungen 17b den beiden Multiplizierern 12b, 16b zugeführt, die einen Spreizungscode mit den entschlüsselten, an den Leitungen 28, 29 anliegenden Abtastwerten multiplizieren.

Die entschlüsselten und entspreizten Abtastwerte werden über Leitungen 30, 31 den nachgeschalteten Multiplizierern 12c, 15c zugeführt. Die Multiplizierer 12c, 15c erhalten über die Leitungen 17c Pilotsymbole zur Multiplikation mit den an den Leitungen 30, 31 anliegenden entschlüsselten und entspreizten Abtastwerten. Ausgangsseitig sind die Multiplizierer 12c, 15c über Leitungen 32, 33 an Integratoren 34, 35 angeschlossen, die eine Zeitintegration über eine bestimmte Zeitdauer durchführen, die vorzugsweise die Hälfte der Chipzeitdauer $T_c$ beträgt. Die integrierten Signale gelangen über Leitungen 36, 37 an Signalquadrierer 38, 39, die ausgangsseitig über die Leitungen 18, 19 an dem Subtrahierer 20 angeschlossen sind. Die in den Fig. 2, 3 dargestellten Abtastsignale s(t+Δ) sowie s(t-Δ) sind komplexe Signale.

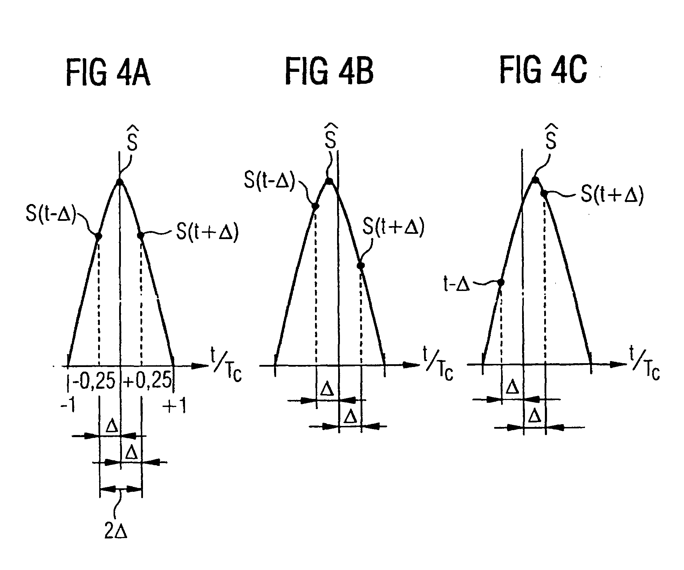

Fig. 4 zeigt verschiedene Abtastsituationen anhand der Autokorrelationsfunktion des Abtastimpulsformers 5. Dabei ist Δ = $T_c$/4, also ein Viertel der Chipzeitdauer.

Fig. 4a zeigt den Idealfall einer zeitrichtigen Abtastung. Bei zeitgenauer Abtastung ist die Höhe des ersten Abtastwertes von s(t+Δ) und des zweiten Abtastwertes s(t-Δ) genau gleich hoch, so daß das Abweichungssignal ε 0 beträgt. Die Interpolationseinrichtung 24 berechnet aus den beiden Abtastwerten den Interpolationsschätzwert $\hat{s}$ zur weiteren Datenverarbeitung.

Fig. 4b zeigt die Situation bei einer zu späten Abtastung, bei der der vorangehende Abtastwert s(t+Δ) einen geringeren Wert als der nachfolgende Abtastwert s(t-Δ) hat. Aus den beiden Abtastwerten sowie der Abweichung ε zwischen den aus Abtastwerten gebildeten Korrelationswerten berechnet die Interpolatioseinrichtung 24 wiederum den Interpolationsschätzwert $\hat{s}$.

Fig. 4c zeigt die umgekehrte Situation, bei der die Abtastung zu früh erfolgt. Hier ist der erste Abtastwert s(t+Δ) größer als der nachfolgende Abtastwert s(t-Δ). Die Interpolationseinrichtung 24 berechnet wiederum den Inter-

polationsschätzwert $\hat{s}$ in Abhängigkeit von den beiden Abtastwerten sowie der Abweichung zwischen den aus den Abtastwerten gebildeten Korrelationswerten.

Bei der erfindungsgemäßen Vorrichtung werden im Unterschied zum Stand der Technik nicht phasenverschobene Codes zur Korrelation verwendet, sondern zeitverschobene Abtastdaten, die um $T_c/4$ im Vergleich zu einem geschätzten optimalen Abtastzeitpunkt vorauseilen oder verzögert sind. Es ist auf diese Weise möglich, eine einzige Taktquelle als Zeitreferenzsignal innerhalb der Feinsynchronisationsvorrichtung vorzusehen und somit ein einziges Chip-Taktsignal für den gesamten Empfänger. Die optimale Abtastzeit wird somit mit sehr geringem schaltungstechnischen Aufwand ermittelt. Da die Abtastrate die halbe Chipzeitdauer beträgt, wird eine Auflösung von $T_c/8$ benötigt, um Zeitabweichungen in dieser Größenordnung festzustellen und auszugleichen.

## Patentansprüche

**1.** Vorrichtung zur Feinsynchronisation von Codesignalen mit einem codierten Empfangssignal, wobei die Vorrichtung aufweist:

- eine Abtasteinrichtung (3) zum Abtasten des Empfangssignals in regelmäßigen Abtastzeitabständen,
- eine Impulsformeinrichtung (5) zur Impulsformung der abgetasteten Empfangssignalimpulse zur Abgabe eines ersten und eines zweiten impulsgeformten Abtastwertes in Abhängigkeit von einer Autokorrelationsfunktion,
- eine Codesignal-Erzeugungseinrichtung (16) zur Generierung des Codesignals,
- Korrelationseinrichtungen (12, 15) zur Korrelation des erzeugten Codes mit den beiden Abtastwerten zu zwei Korrelationswerten, und
- eine Interpolationseinrichtung (24) zur Bildung eines Interpolationswertes in Abhängigkeit von den beiden impulsgeformten Abtastwerten und der Abweichung zwischen den beiden Korrelationswerten,

**dadurch gekennzeichnet,**

- **daß** die Vorrichtung einen Zwischenspeicher (7) zum Zwischenspeichern der beiden impulsgeformten Abtastwerte aufweist, und
- **daß** bei beiden Korrelationen das Codesignal dieselbe Zeitlage aufweist.

**2.** Vorrichtung nach Anspruch 1,
**dadurch gekennzeichnet,**

- **daß** die Korrelationseinrichtungen (12, 15) Multiplizierer sind.

**3.** Vorrichtung nach Anspruch 1 oder 2,
**dadurch gekennzeichnet,**

- **daß** die Codesignal-Erzeugungseinrichtung (16) einen Entschlüsselungscode generiert.

**4.** Vorrichtung nach Anspruch 1 oder 2,
**dadurch gekennzeichnet,**

- **daß** die Codesignal-Erzeugungseinrichtung (16) einen Entspreizungscode generiert.

**5.** Vorrichtung nach einem der vorangehenden Ansprüche,
**dadurch gekennzeichnet,**

- **daß** den Korrelationseinrichtungen (12, 15) jeweils Integratoren (34, 35) nachgeschaltet sind.

**6.** Vorrichtung nach einem der vorangehenden Ansprüche,
**dadurch gekennzeichnet,**

- **daß** ein Subtrahierer (20) zur Subtraktion der Korrelationswerte zur Bildung eines Abweichungssignals vorgesehen ist.

**7.** Vorrichtung nach Anspruch 6,

**dadurch gekennzeichnet,**

-   **daß** dem Subtrahierer (20) ein digitales FIR-Schleifenfilter (22) nachgeschaltet ist.

8.  Vorrichtung nach einem der vorangehenden Ansprüche,
    **dadurch gekennzeichnet,**

    -   **daß** der Abtastzeitabstand, mit dem das Empfangssignal abgetastet wird, die halbe Chipzeitdauer $T_c$ beträgt.

9.  Vorrichtung nach einem der vorangehenden Ansprüche,
    **dadurch gekennzeichnet,**

    -   **daß** die Interpolationseinrichtung (24) ein linearer TVI-Interpolator ist.

10. Vorrichtung nach einem der vorangehenden Ansprüche 1 bis 8,
    **dadurch gekennzeichnet,**

    -   **daß** die Interpolationseinrichtung (24) ein quadratischer TVI-Interpolator ist.

11. Vorrichtung nach einem der vorangehenden Ansprüche,
    **dadurch gekennzeichnet,**

    -   **daß** die Interpolationseinrichtung (24) eine Abweichüngsfak, tor-Berechnungseinheit zur Berechnung eines Abweichungsfaktors N in Abhängigkeit von dem Abweichungssignal $\varepsilon$ aufweist.

12. Vorrichtung nach einem der vorangehenden Ansprüche,
    **dadurch gekennzeichnet,**

    -   **daß** die Interpolationseinrichtung (24) den Interpolationswert $\hat{s}$ aus den beiden impulsgeformten Abtastwerten s und dem Abweichungsfaktor N berechnet gemäß:

$$\hat{s}(t) = Nx\frac{s(t+\Delta)-s(t-\Delta)}{4}+s(t-\Delta),$$

wobei $T_c$ die Chipzeitdauer ist.

13. Vorrichtung nach einem der vorangehenden Ansprüche,
    **dadurch gekennzeichnet,**

    -   **daß** die Impulsformeinrichtung (5) ein RRC-Filter ist.

14. Vorrichtung nach einem der vorangehenden Ansprüche,
    **dadurch gekennzeichnet,**

    -   **daß** die Impulsformeinrichtung (5) eine Autokorrelationsfunktion gemäß

$$\varphi_{gg}(t) = \frac{\cos\left(\pi r\frac{t}{T_c}\right)}{1-\left(2r\frac{t}{T_c}\right)^2}\,\text{sinc}\left(\frac{\pi t}{T_c}\right),$$

aufweist,
wobei $0 \leq r \leq 1$

und

$T_c$ die Chipzeitdauer ist.

**Claims**

1. Apparatus for fine synchronization of code signals with a coded receive signal, the apparatus having:

   - a sampling device (3) for sampling the receive signal at regular sampling intervals,
   - a pulse shaper (5) for shaping the sampled receive signal pulses in order to output a first and second pulse-shaped sample in dependence on an autocorrelation function,
   - a code signal generator (16) for generating the code signal,
   - correlation devices (12, 15) for correlating the generated code with the two samples to form two correlation values, and
   - an interpolation device (24) for forming an interpolation value as a function of the two pulse-shaped samples, and for forming the deviation between the two correlation values,

   **characterized**

   - **in that** the apparatus has a buffer (7) for buffering the two pulse-shaped samples, and
   - **in that** the code signal has the same timeslot in the two correlations.

2. Apparatus according to Claim 1, **characterized**

   - **in that** the correlation devices (12, 15) are multipliers.

3. Apparatus according to Claim 1 or 2, **characterized**

   - **in that** the code signal generator (16) generates a decryption code.

4. Apparatus according to Claim 1 or 2, **characterized**

   - **in that** the code signal generator (16) generates a despreading code.

5. Apparatus according to one of the preceding claims, **characterized**

   - **in that** integrators (34, 35) are respectively connected downstream of the correlation devices (12, 15).

6. Apparatus according to one of the preceding claims, **characterized**

   - **in that** a subtractor (20) is provided for subtracting the correlation values in order to form a deviation signal.

7. Apparatus according to claim 6, **characterized**

   - **in that** a digital FIR loop filter (22) is connected downstream of the subtractor (20).

8. Apparatus according to one of the preceding claims, **characterized**

   - **in that** the sampling interval at which the receive signal is sampled is half the chip duration $T_c$.

9. Apparatus according to one of the preceding Claims, **characterized**

   - **in that** the interpolation device (24) is a linear TVI interpolator.

**10.** Apparatus according to one of the preceding Claims 1 to 8, **characterized**

- **in that** the interpolation device (24) is a quadratic TVI interpolator.

**11.** Apparatus according to one of the preceding claims, **characterized**

- **in that** the interpolation device (24) has a deviation factor calculating unit for calculating a deviation factor N as a function of the deviation signal $\varepsilon$.

**12.** Apparatus according to one of the preceding claims, **characterized**

- **in that** the interpolation device (24) calculates the interpolation value $\hat{s}$ from the two pulse-shaped samples s and the deviation factor N in accordance

$$\hat{s}(t) = N \times \frac{s(r+\Delta)-s(t-\Delta)}{4} + s(t-\Delta),$$

with:

$T_c$ being the chip duration.

**13.** Apparatus according to one of the preceding claims, **characterized**

- **in that** the pulse shaper (5) is an RRC filter.

**14.** Apparatus according to one of the preceding claims, **characterized**

- **in that** the pulse shaper (5) has an autocorrelation function in accordance with

$$\varphi_{gg}(t) \;=\; \frac{\cos\left(\pi r \dfrac{t}{T_c}\right)}{1-\left(2r\dfrac{t}{T_c}\right)^2}\, \mathrm{sinc}\left(\frac{\pi t}{T_c}\right),$$

$0 \leq r \leq 1$
and
$T_c$ being the chip duration.

**Revendications**

**1.** Système de synchronisation précise de signaux de codage à un signal de réception codé, le système comportant :

- un dispositif (3) d'échantillonnage du signal de réception à des intervalles de temps d'échantillonnage réguliers,
- un dispositif (5) de formation des impulsions, échantillonnées du signal de réception, destiné à émettre une première et une deuxième valeur d'échantillonnage conformées en impulsions en fonction d'une fonction d'autocorrélation,
- un dispositif (16) de production du signal de codage,
- des dispositifs (12, 15) de corrélation du code produit avec les deux valeurs d'échantillonnage pour obtenir deux valeurs de corrélation, et
- un dispositif (24) d'interpolation, destiné à former une valeur d'interpolation en fonction des deux valeurs d'échantillonnage conformées en impulsions et de l'écart entre les deux valeurs de corrélation,

**caractérisé**

- **en ce que** le système comporte une mémoire (7) tampon pour mise en mémoire tampon des deux valeurs d'échantillonnage conformées en impulsions, et
- en ce que les deux corrélations du signal de codage ont la même position dans le temps.

**2.** Système suivant la revendication 1,
**caractérisé**

- **en ce que** les dispositifs (12, 15) de corrélation sont des multiplicateurs.

**3.** Système suivant la revendication 1 ou 2,
**caractérisé**

- **en ce que** le dispositif (16) de production d'un signal de codage engendre un code de déchiffrage.

**4.** Système suivant la revendication 1 ou 2,
**caractérisé**

- **en ce que** le dispositif (16) de production d'un signal de codage engendre un code de désétalement.

**5.** Système suivant l'une des revendications précédentes,
**caractérisé**

- **en ce que** des intégrateurs (34, 35) sont montés respectivement en aval des dispositifs (12, 15) de corrélation.

**6.** Système suivant l'une des revendications précédentes,
**caractérisé**

- **en ce qu'**un soustracteur (20) de soustraction des valeurs de corrélation est prévu pour la formation d'un signal d'écart.

**7.** Système suivant la revendication 6,
**caractérisé**

- **en ce qu'**un filtre (22) numérique à boucle FIR est monté en aval du soustracteur (20).

**8.** Système suivant l'une des revendications précédentes,
**caractérisé**

- **en ce que** l'intervalle de temps d'échantillonnage avec lequel est échantillonné le signal de réception est égal à la moitié de la durée $T_c$ de puce.

**9.** Système suivant l'une des revendications précédentes,
**caractérisé**

- **en ce que** le dispositif (24) d'interpolation est un interpolateur TVI linéaire.

**10.** Système suivant l'une des revendications précédentes 1 à 8,
**caractérisé**

- **en ce que** le dispositif (24) d'interpolation est un interpolateur TVI quadratique.

**11.** Système suivant l'une des revendications précédentes,
**caractérisé**

- **en ce que** le dispositif (24) d'interpolation comporte une unité de calcul de facteur d'écart destinée à calculer un facteur N d'écart en fonction du signal ε d'écart.

12. Système suivant l'une des revendications précédentes,
   **caractérisé**

   - **en ce que** le dispositif (24) d'interpolation calcule la valeur d'interpolation à partir des deux valeurs s d'échantillonnage conformées en impulsions et du facteur N d'écart suivant :

$$\overset{\wedge}{s}(t) = Nx \frac{s(t+\Delta)-s(t-\Delta)}{4}+s(t-\Delta),$$

   $T_c$ étant la durée de puce.

13. Système suivant l'une des revendications précédentes,
   **caractérisé**

   - **en ce que** le dispositif (5) de formation d'impulsions est un filtre RRC.

14. Système suivant l'une des revendications précédentes,
   **caractérisé**

   - **en ce que** le dispositif (5) de formation d'impulsions a une fonction d'autocorrélation suivant

$$\varphi_{gg}(t) = \frac{\cos\left(\pi r \frac{t}{T_c}\right)}{1-\left(2r\frac{t}{T_c}\right)^2} \operatorname{sinc}\left(\frac{\pi t}{T_c}\right),$$

   avec 0≤r≤1
   et
   $T_c$ étant la durée de puce.

FIG 1

$f_A$

E

Abtasteinrichtung

Impulsformer

K1

K2

$\tau_{Ref}$

S

$\varepsilon$

K3

G1

G2

VCO

Filter

$C(t+\frac{T_2}{2})$

$C(t-\frac{T_2}{8})$

G3

DLL

EP 1 210 805 B1

FIG 2

FIG 3

EP 1 210 805 B1

# FIG 4A

# FIG 4B

# FIG 4C